# EUROPEAN PATENT APPLICATION

(11) **EP 4 530 062 A1**
(43) Date of publication of application: **02.04.2025**
(21) Application number: 23200221.2
(22) Date of filing: 27.09.2023
(51) Int. Cl.: B32B 17/10

(54) **PROCESS FOR PRODUCING POLYVINYL BUTYRAL INTERLAYER FILMS WITH RECYCLED RAW MATERIALS**

(71) Applicant: Kuraray Europe GmbH, 65795 Hattersheim am Main (DE)
(72) Inventor: Lomnitz, Stephan, Troisdorf (DE)
(74) Representative: Janßen, Christian Oliver

(57) **Abstract**

The invention is directed to a process to produce a multilayer film for laminated glass wherein at least one of the layers comprises a mixture of polyvinyl butyral resin a plasticizer obtained from a recycled laminated glass.

## Description

The invention is directed to a process to produce a multilayer film for laminated glass wherein at least one of the layers comprises a mixture of polyvinyl butyral resin a plasticizer obtained from a recycled laminated glass.

Films based on plasticized polyvinyl butyral resins are long known as adhesive film for glass sheets. Currently, many efforts are being started to recycle such laminated glass from vehicles as well as from architectural applications. However, these efforts have had limited success so far, as the technologies used do not purify the plastic sufficiently. This lack of purity means that it has only been possible to use recycled PVB in low-quality applications, such as tiles, carpets, sound insulation and mixing with bitumen.

Additionally, the exact composition of the recycled interlayer mixtures from various glass laminates from different sources is usually unknown. For example, the types and amounts of polyvinyl butyral, plasticizer and adhesion control agents in these mixtures will necessarily vary as they will come from different original glass makers and interlayer producing companies. If possible at all, it would require tedious analysis and readjustment of the composition to provide new interlayer films from the recycled material that passes the industry safety tests for laminated glass.

Accordingly, object of the present invention was to simplify the recycling process to achieve higher throughput and/or lower costs.

Surprisingly, it was found that an interlayer film having at least three layers, wherein the inner layer is obtained from material obtained by recycling which is then sandwiched between two layers made from virgin raw material can meet the industry standards for glass safety.

Accordingly, one object of the present invention is a process to produce an interlayer film for laminated glass wherein the interlayer film comprises at least one layer B sandwiched by at least two layers A, wherein each layer comprises a mixture of at least one polyvinyl butyral resin and at least one plasticizer, by extrusion of the layers characterized in
- providing a first laminated glass with a first interlayer film comprising a first mixture of at least one polyvinyl butyral resin and at least one plasticizer
- recovering at least a part of the first interlayer film from the first laminated glass thereby providing at least a part of the mixture of layer B,
- providing the mixture of the two layers A wherein the polyvinyl butyral resin in the mixture of layer A is virgin material,
- extruding the mixtures into layers and
- combining the layers into the interlayer film

Preferably, the layers are combined by co-extrusion of the layers using co-extrusions techniques well-known in the art.

In an alternative preferred embodiment, the layers can be separately extruded and then combined by stacking of the layers. Thus, the recycled material is extruded to form a layer B. Layers A can be extruded separately or can be obtained commercially.

Interlayer films for laminated glazing are well known and are nearly exclusively produced from mixtures of polyvinyl butyral and a plasticizer (usually triethyleneglycol-bis-n-hexanoate = 3GO or 3G8). Multilayer film consists of several such layers wherein the layers contain chemically different polyvinyl butyrals, which can be mixed with different amounts of plasticizers and thus, different mechanical properties. Usually, the inner player is softer than the two outer layers which leads to a sound damping effect in the resulting laminated glass. Accordingly, another embodiment of the present invention is a sound-insulating interlayer comprising a softer inner layer, preferably from virgin material, sandwiched between two layers B. This trilayer, recycled structure is than sandwiched between two virgin layers A.

With the method of the invention, the surface of the interlayer in contact with glass is always produced from virgin material and therefore adhesion of the film can be adjusted at need. The layer produced from recycled material is not in contact with glass and adhesion control is not necessary.

The term "virgin material" refers to any non-recycled material. In other words, the term "virgin material" refers to polyvinyl butyral which previously has not been made into a film and subsequently used to produce a glass laminate. Thus, "virgin material" refers to polyvinyl butyral which previously has not been used for manufacturing laminated glass.

The materials for providing the mixture of layer B is obtained from already produced laminated glass, for example from old windscreens or building windows.

To this end, the interlayer film needs to be extracted from the glazing. Recycling such interlayer films usually involves mechanically crushing the glass plates of the laminated glass, immersing the crushed product in water for several days. Thereby, the interlayer film is swollen to reduce adhesive strength between the interlayer film and the glass plate, and subsequently separating the interlayer film and the glass plate.

Alternatively, the interlayer material can be extracted or washed with a solvent like an organic solvent, water or supercritical carbon dioxide from the crushed laminates or melted and then separated.

Separation can also be achieved by centrifugation or melt filtration after disintegration of the laminated glass.

In a first embodiment, the first laminated glass is mechanically disintegrated and recovery of at least a part of the first interlayer film from the first laminated glass is performed by melting the first interlayer film from the disintegrated first laminated glass thereby obtaining at least a part of the mixture of layer B.

In a second embodiment, the first laminated glass is mechanically disintegrated and recovery of at least a part of the first interlayer film from the first laminated glass is performed by dissolving the first interlayer film in a solvent and after removing the disintegrated first laminated glass, removing the solvent thereby obtaining at least a part of the mixture of layer B.

In both embodiments, recycled material comprising polyvinyl butyral and plasticizers is obtained. In order to adjust viscosity of the layer B during extrusion and/or production, it might be necessary to add plasticizer and/or polyvinyl butyral. Added materials may be obtained by recycling as already disclosed or from virgin material. The amount of virgin material in layer B shall preferably not be more than 20% based on the total amount of the respective material, preferably not more than 10% and most preferably, no virgin material is added to layer B.

Besides the adhesion properties, the optical properties of the interlayer film are not affected by the process of the invention. For example, the interlayer film should have a yellow value db of less than 1 and/or a delta b* value of less than 3.

In variants of the invention, the optical properties can be enhanced by filtrating the mixture of layer B during extrusion or co-extrusion. Further, the mixture of layer B may be subjected to chemical clearing, for example by oxidation.

Nevertheless, the composition of layer B and thus, the final laminate, might still not be on par with laminates obtained with completely virgin material. Thus, it is preferred to provide at least one of the layers A or layer B with at least one dye and/or pigment. The pigment preferably is carbon black, calcium carbonate, or TiO₂.

The thickness of layer A is as thin as technically possible in order to achieve stable adhesion of the final multilayer system to the glass. Preferably, layers A have a thickness of less than 150 µm, more preferably less than 100 µm and most preferably less than 50 µm.

The general composition of the layers should comply with the standard recipes of interlayer films and is known to the person skilled in the art.

In the following, some general teaching is given as guideline:
The different layers may contain one or more plasticizers that are common in this technical field and are known to the person skilled in the art. One or more plasticizers are particularly preferable, selected from the group of di-2-ethylhexyl sebacate, 1,2 cyclohexane dicarboxylic acid diisononyl ester, di-2-ethylhexyl adipate, di-2-ethylhexyl phthalate, dioctyl adipate, dihexyl adipate, dibutyl sebacate, di-2-butoxyethyl sebacate, triethyleneglycol-bis-2-ethylhexanoate, triethyleneglycol-bis-n-heptanoate, triethyleneglycol-bis-n-hexanoate, tetraethyleneglycol-bis-n-heptanoate, di-2-butoxyethyl adipate, di-2-butoxyethoxyethyl adipate.

The layers may also contain the same or different adhesion regulators, such as the alkaline and/or alkaline earth salts of organic acids disclosed in WO 03/033583 A1. Potassium acetate and/or magnesium acetate have proven to be particularly suitable.

The alkaline and/or alkaline earth metal salts can be used alone or in combination in an amount from 0 to 1000 ppm, particularly 100 to 500 ppm.

In the present invention, the average degree of acetalisation of the polyvinyl butyral of the layers is preferably not less than 40 mol%, more preferably not less than 50 mol%.

The average degree of acetalisation of the polyvinyl butyral resin in the layers is preferably not more than 90 mol%, more preferably not more than 80 mol%.

The average vinyl acetate unit content of the polyvinyl butyral resin is preferably not more than 30 mol%, more preferably not more than 20 mol%.

The lower limit of the average content of the vinyl acetate units is not limited but is usually not less than 0.1 mol%.

The average content of vinyl alcohol units of the polyvinyl butyral resin is preferably not less than 5 mol%, more preferably not less than 15 mol%.

The average content of vinyl alcohol units of the polyvinyl butyral resin is preferably not more than 50 mol%, more preferably not more than 40 mol%.

In a second aspect, the present invention concerns an interlayer film for laminated glass comprising at least one layer B comprising polyvinyl butyral and at least one plasticizer obtained from recycling laminated glass, wherein the layer B is sandwiched by at least two layers A, wherein each layer A comprises virgin polyvinyl butyral and viring plasticizer, wherein the thickness of the layers A is equal to or less than 150 mm.

### Testing methods

The radiation stability of the films was tested in composite glass between two panes of 2-mm-thick glass of the type Optiwhite^{®} (glass with a low iron oxide content from the company Pilkington). Laminates with the dimensions 15×15 cm were exposed for a period of 20 weeks in the irradiation chamber according to EN 12543. However, in deviation from the conditions of EN 12543, a higher specimen temperature of a constant 80° C. was set because this more closely corresponds to the combined radiation and temperature burden actually occurring in use under unfavorable conditions.

By comparative measurement of the b* value (CIELAB) of the irradiated laminate against an original laminate stored in the dark, the relative increase in the b* value may be used as a measure of the radiation stability of the PVB film with the respective type of stabilizer and/or the respective stabilizer combination. The b* value was measured on a ColorQuest XE color meter from Hunterlab in the CIELAB system in transmission (10°/D65). The delta b* value is obtained as the difference between the b* value of the irradiated specimen and the b* value of the original specimen.

A laminated glass with film 0.76 mm thick with two panes of 2 mm-thick Optiwhite glass was measured on the ColorQuest XE in the Hunterlab 2°/C setting for the purpose of differentiating the inherent color of the extruded film (without additional exposure to irradiation). In this method the inherent color of the glass is averaged out as a zero specimen by measuring the pair of panes of identical glass from the same batch and the contribution of the intermediate layer to the yellow coloration was determined numerically as the yellow value db.

Films were produced with the mixtures of the compositions shown in the following tables and thicknesses and were processed as laminates between 2 panes of 2-mm-thick white glass (Optiwhite) and tested.

## Claims

1. Process to produce an interlayer film for laminated glass wherein the interlayer film comprises at least one layer B sandwiched by at least two layers A, wherein each layer comprises a mixture of at least one polyvinyl butyral resin and at least one plasticizer, by extrusion of the layers comprising the following steps in that order
- providing a first laminated glass with a first interlayer film comprising a first mixture of at least one polyvinyl butyral resin and at least one plasticizer,
- recovering at least a part of the first interlayer film from the first laminated glass thereby providing at least a part of the mixture of layer B,
- providing the mixture of the two layers A wherein the polyvinyl butyral resin in the mixture of layer A is virgin material,
- extruding the mixtures into layers and
- combining the layers into the interlayer film.

2. Process according to claim 1 **characterized in that** the layers are combined by co-extrusion of the layers.

3. Process according to claim 1 **characterized in that** the layers are combined by stacking of the layers.

4. Process according to any of the claims 1 to 3 **characterized in that** the first laminated glass is mechanically disintegrated and recovering at least a part of the first interlayer film from the first laminated glass is performed by melting the first interlayer film from the disintegrated first laminated glass thereby obtaining at least a part of the mixture of layer B.

5. Process according to any of the claims 1 to 3 **characterized in that** the first laminated glass is mechanically disintegrated and at least a part of the first interlayer film from the first laminated glass is extracted with a solvent or mechanically separated from the glass and washed with a solvent and, after removing the glass, removing the solvent thereby obtaining at least a part of the mixture of layer B.

6. Process according to any of claims 1 to 5 **characterized in that** the interlayer film has a yellow value db of less than 1.

7. Process according to any of claims 1 to 6 **characterized in that** the interlayer film has a delta b* value of less than 3.

8. Process according to any of claims 1 to 7 **characterized in that** the mixture of layer B is filtrated during extrusion or co-extrusion.

9. Process according to any of claims 1 to 8 **characterized in that** the mixture of layer B is subjected to chemical clearing.

10. Process according to any of claims 1 to 9 **characterized in that** the thickness of the layers A is equal to or less than 150 µm.

11. Process according to any of claims 1 to 10 **characterized in that** the mixture of layer A is provided with at least one potassium and/or magnesium salt.

12. Process according to any of claims 1 to 11 **characterized in that** at least one of the layers A or layer B is provided with at least one dye and/or pigment.

13. Process according to claim 12 **characterized in that** pigment is carbon black, calcium carbonate or TiO₂.

14. An interlayer film for laminated glass comprising at least one layer B comprising polyvinyl butyral and at least one plasticizer obtained from recycling laminated glass, wherein the layer B is sandwiched by at least two layers A, wherein each layer A comprises virgin polyvinyl butyral and virgin plasticizer, wherein the thickness of the layers A is equal to or less than 150 µm.
